(19) Europäisches Patentamt
European Patent Office
Office européen des brevets

(11) **EP 4 140 561 A1**

(12) **EUROPEAN PATENT APPLICATION**
published in accordance with Art. 153(4) EPC

(43) Date of publication:
01.03.2023 Bulletin 2023/09

(21) Application number: 21793419.9

(22) Date of filing: 30.03.2021

(51) International Patent Classification (IPC):
*B01D 39/20* (2006.01)  *B01D 71/02* (2006.01)
*C04B 41/83* (2006.01)  *C04B 41/89* (2006.01)

(52) Cooperative Patent Classification (CPC):
B01D 39/20; B01D 71/02; C04B 41/83; C04B 41/89

(86) International application number:
PCT/JP2021/013454

(87) International publication number:
WO 2021/215205 (28.10.2021 Gazette 2021/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.04.2020 JP 2020075786

(71) Applicant: SUMITOMO CHEMICAL COMPANY, LIMITED
Tokyo 103-6020 (JP)

(72) Inventors:
• NASU, Tomomichi
Tsukuba-shi, Ibaraki 300-3294 (JP)
• HARA, Syusaku
Niihama-shi, Ehime 792-8521 (JP)
• SADAOKA, Kazuo
Niihama-shi, Ehime 792-8521 (JP)

(74) Representative: Vossius & Partner
Patentanwälte Rechtsanwälte mbB
Siebertstraße 3
81675 München (DE)

(54) **POROUS CERAMIC LAMINATE AND METHOD FOR MANUFACTURING SAME**

(57) An object of the present invention is to provide a porous ceramic laminate that can reduce pressure loss of a fluid. The present invention is a porous ceramic laminate comprising a first porous layer and a second porous layer, wherein the second porous layer is laminated on the first porous layer, the second porous layer has a portion being laminated on, in contact with, the first porous layer and a portion being laminated over the first porous layer via air, and a coefficient of variance CV ($t_b$) of the second porous layer thickness is not larger than 0.35.

【Figure 1】

**Description**

TECHNICAL FIELD

The present invention relates to a porous ceramic laminate and a process for producing the same.

BACKGROUND ART

In various fields, porous ceramics are used as membranes, such as a microfiltration membrane, an ultrafiltration membrane, a nanofiltration membrane, a reverse osmosis membrane, an ion-exchange membrane, and a gas separation membrane, that have functions of separation, concentration, filtration, etc., of a fluid such as a gas or a liquid.

For example, Patent Literature 1 discloses a ceramic porous body which is a ceramic porous asymmetric membrane including an inorganic support body and one or more inorganic coating layers that coat the support body, the ceramic porous body including a thin-layer-shaped inorganic porous body as at least one layer among the one or more inorganic coating layers that coat the support body. In Patent Literature 1, a slurry membrane containing alumina having an average particle diameter of 3 or 5 $\mu$m is formed on a porous support body having an average pore diameter of 11.0 or 14.2 $\mu$m, and the resultant matter is baked, and then a porous layer is formed on the porous support body. Patent Literature 2 discloses an asymmetric membrane including a support layer and a porous layer formed on the inner surface or the outer surface of the support layer. In Patent Literature 2, a support layer having a continuous pore diameter of 1 to 2 $\mu$m is created by using alumina particles or particles of another inorganic substance having an average particle diameter of 5 $\mu$m, and a porous layer is formed on a surface of the support layer by using a liquid in which an alumina fine powder having an average particle diameter of 0.5 $\mu$m is dispersed.

CITATION LIST

PATENT LITERATURE

Patent Literature 1: JPH11-292653A
Patent Literature 2: JPS62-186908A

SUMMARY OF THE INVENTION

PROBLEMS TO BE SOLVED BY THE INVENTION

When separation or the like of a fluid is performed by use of a porous ceramic, it is important that the fluid easily flows in the ceramic porous body while the function of separation or the like is sufficiently exhibited, i.e., that pressure loss of the fluid is small. However, in Patent Literatures 1 and 2, it is considered to be difficult to reduce the pressure loss of the fluid.

Therefore, an object of the present invention is to provide a porous ceramic laminate that can reduce pressure loss of a fluid.

SOLUTION TO THE PROBLEMS

The present invention that achieved the above problem is as follows.

[1] A porous ceramic laminate comprising a first porous layer and a second porous layer, wherein

the second porous layer is laminated on the first porous layer,
the second porous layer has a portion being laminated on, in contact with, the first porous layer and a portion being laminated over the first porous layer via air, and
a coefficient of variance CV ($t_b$) of the second porous layer thickness is not larger than 0.35.

[2] The porous ceramic laminate according to [1], wherein
an average pore diameter $D_a$ of the first porous layer is not smaller than 0.1 $\mu$m and not larger than 600 $\mu$m.
[3] The porous ceramic laminate according to [1] or [2], wherein
a value ($\sigma(t_b) / D_a$) obtained by dividing a standard deviation $\sigma(t_b)$ of a thickness of the second porous layer by an

average pore diameter $D_a$ of the first porous layer is not larger than 0.8.

[4] The porous ceramic laminate according to any one of [1] to [3], wherein

a value $(AVE(t_b) / D_a)$ obtained by dividing an average value $AVE(t_b)$ of a thickness of the second porous layer by an average pore diameter $D_a$ of the first porous layer is not larger than 5.

[5] The porous ceramic laminate according to any one of [1] to [4], wherein

a void ratio at an interface between the first porous layer and the second porous layer is not smaller than 29.0%.

[6] The porous ceramic laminate according to any one of [1] to [5], wherein

a ratio $(D_a / D_b)$ of an average pore diameter $D_a$ of the first porous layer to an average pore diameter $D_b$ of the second porous layer is not smaller than 10.

[7] A process for producing the porous ceramic laminate according to any one of [1] to [6], comprising

a step of applying a water repellent agent and/or an oil repellent agent to at least one surface of the first porous layer,

wherein the water repellent agent and/or the oil repellent agent is applied so as to satisfy the following conditions (1) and (2).

(1) The water repellent agent and/or the oil repellent agent is applied to at least one surface of the first porous layer and after drying, and when air is flowed at a flow rate of 1.0 $m^3/h$ from a surface of the first porous layer applied with the water repellent agent and/or the oil repellent agent (either of applied surfaces in the case where both surfaces are applied to), air flows at a flow rate of at least 0.8 $m^3/h$ from a surface opposite to the surface to which air has been flowed.

(2) The water repellent agent and/or the oil repellent agent is applied to at least one surface of the first porous layer and after drying, and when air is flowed at a flow rate of 1.0 $m^3/h$ from a surface of the first porous layer applied with the water repellent agent and/or the oil repellent agent (either of applied surfaces in the case where both surfaces are applied to), a weight loss rate between before and after flowing air is within 0.1%.

ADVANTAGEOUS EFFECTS OF THE INVENTION

The porous ceramic laminate of the present invention can reduce pressure loss of a fluid such as a gas or a liquid.

BRIEF DESCRIPTION OF THE DRAWINGS

[Figure 1] Figure 1 is an analyzed image when a thickness of a second porous layer is measured in Example 2.

[Figure 2] Figure 2 is a schematic drawing showing a way for measuring a void ratio.

DESCRIPTION OF EMBODIMENTS

A porous ceramic laminate of the present invention comprises a first porous layer, and a second porous layer which is laminated on the first porous layer, and is characterized by that the second porous layer has a portion being laminated on, in contact with the first porous layer and a portion being laminated over the first porous layer via air, and a coefficient of variance CV ($t_b$) of the second porous layer thickness is not larger than 0.35.

A part of the second porous layer is laminated on, in contact with the first porous layer, and the other part of the second porous layer is laminated over the first porous layer via air. It is an important requirement that the second porous layer has a part being laminated over the first porous layer via air to reduce pressure loss of a fluid.

In addition, in the porous ceramic laminate, forming the second porous layer uniformly such that a coefficient of variance CV ($t_b$) of the second porous layer thickness is not larger than 0.35 can reduce pressure loss of a fluid which flows in the porous ceramic laminate. The coefficient of variance CV ($t_b$) of the second porous layer thickness $t_b$ is preferably not larger than 0.32, more preferably not larger than 0.25, and further preferably not larger than 0.20. The lower limit of coefficient of variance is not particularly limited, and for example, is 0.05 and may be 0.10. The thickness $t_b$ can be measured according to the following way and the coefficient of variance CV ($t_b$) of the thickness can be calculated by dividing a standard deviation $\sigma(t_b)$ of the thickness by an average value $AVE(t_b)$ of the thickness. First, an image of a cross section parallel to a direction to which the first porous layer and the second porous layer are laminated is obtained. In the above image, an image is obtained such that a total length of a surface of the second porous layer on the side of the first layer is not smaller than 100 times as much as an average pore diameter of the first porous layer and only the second porous layer is extracted by an image analysis. Thereafter, the obtained image is delimited at a regular interval into 190 or more regions. An area of each region is determined and a value obtained by dividing the area by a length of a delimited interval is determined as a thickness of the second porous layer at each region. An average value, a standard deviation and a coefficient of variance are obtained for thicknesses determined in all of measured regions. In this regard, however, the delimited interval is determined so as to be not larger than 1.8 times as much as the average pore diameter of the first porous layer.

As long as the coefficient of variance CV ($t_b$) of the thickness is not larger than 0.35, the average value AVE($t_b$) of the thickness of the second porous layer is not limited, and the average value AVE($t_b$) is, for example, not smaller than 0.3 $\mu$m, more preferably not smaller than 1.0 $\mu$m, further preferably not smaller than 5.0 $\mu$m, furthermore preferably not smaller than 10 $\mu$m. The average value AVE($t_b$) is, for example, not larger than 3000 $\mu$m, more preferably not larger than 500 $\mu$m, further preferably not larger than 100 $\mu$m, furthermore preferably not larger than 75 $\mu$m, and particularly preferably not larger than 50 $\mu$m. The average value AVE($t_b$) may be in a range of not smaller than 15 $\mu$m and not larger than 25 $\mu$m.

A value ($\sigma(t_b)$ / $D_a$) obtained by dividing the standard deviation $\sigma(t_b)$ of the thickness of the second porous layer by an average pore diameter $D_a$ of the first porous layer is also preferably adjusted. $\sigma(t_b)$ / $D_a$ is preferably not larger than 0.8, more preferably not larger than 0.6, further preferably not larger than 0.5, and furthermore preferably not larger than 0.4. A lower limit of $\sigma(t_b)$ / $D_a$ is not particularly limited, and may be about 0.2. $\sigma(t_b)$ / $D_a$ represents a value of a standard deviation of the thickness of the second porous layer to an average pore diameter of the first porous layer and smaller value of $\sigma(t_b)$ / $D_a$ means that the second porous layer is applied uniformly. In terms of reducing pressure loss, smaller $\sigma(t_b)$ / $D_a$ is preferable.

Further, a value (AVE($t_b$) / $D_a$) obtained by dividing an average value AVE($t_b$) of the thickness of the second porous layer by an average pore diameter $D_a$ of the first porous layer is preferably not larger than 5, more preferably not larger than 4, and further preferably not larger than 3. A lower limit of AVE($t_b$) / $D_a$ is not particularly limited, and for example, may be about 0.5.

In terms of reducing pressure loss of a fluid, a void ratio at an interface between the first porous layer and the second porous layer is preferably adjusted to be a predetermined value or more. The void ratio can be calculated according to the following way. First, an image of a cross section parallel to a direction to which the first porous layer and the second porous layer are laminated is obtained. In the above image, an image is obtained such that a total length of a surface of the second porous layer on the side of the first layer is not smaller than 250 times as much as an average pore diameter of the first porous layer, and only the second porous layer is extracted by an image analysis. In a region under the extracted second porous layer (a region on the side of the first porous layer, from a surface of the second porous layer on the side of the first porous layer), starting from a boundary of the second porous layer on the side of the first porous layer, a region twice a pore diameter of the first porous layer is set by an image analysis along the second porous layer, and the region is defined as an analysis region. A void part in the analysis region is extracted by an image analysis and a void ratio can be obtained by dividing the area of the void part by the area of the analysis region and multiplying by 100.

The void ratio is preferably not smaller than 29.0%, more preferably not smaller than 30%, and further preferably not smaller than 33%. The upper limit of the void ratio depends on a void ratio of the first porous layer, and is for example, 55%.

A ratio ($D_a$ / $D_b$) of an average pore diameter $D_a$ of the first porous layer to an average pore diameter $D_b$ of the second porous layer is preferably not smaller than 10. This larger difference between $D_a$ and $D_b$ is preferable, because it allows for a greater reduction in pressure loss of a fluid permeating the porous ceramic laminate. $D_a$ / $D_b$ is preferably not smaller than 10 and not larger than 200, more preferably not smaller than 10 and not larger than 150, further preferably not smaller than 15 and not larger than 100, and furthermore preferably not smaller than 20 (particularly preferably not smaller than 50) and not larger than 65. In the patent literature 1, the porous layer is formed on the porous support body using a slurry containing alumina having an average particle diameter of 3 or 5 $\mu$m. Considering the particle diameter of alumina, an average pore diameter of the porous layer is supposed to be about 1 $\mu$m. As mentioned above, the average pore diameter of the porous support body is 11.0 or 14.2 $\mu$m and therefore, a ratio of the average pore diameter of the support body to the average pore diameter of the porous layer in the patent literature 1 is supposed to be about 14 at maximum. In the patent literature 2, as the continuous pore diameter of the support layer is 1 to 2 $\mu$m and the pore diameter of the porous layer is 0.2 $\mu$m, a ratio of the continuous pore diameter of the support layer to the pore diameter of the porous layer is 10 at maximum.

An average pore diameter $D_a$ of the first porous layer is, for example, not smaller than 0.1 $\mu$m, preferably not smaller than 1.0 $\mu$m, more preferably not smaller than 1.5 $\mu$m, further preferably not smaller than 5 $\mu$m, furthermore preferably not smaller than 9 $\mu$m, and may be not larger than 600 $\mu$m, preferably not larger than 300 $\mu$m, and more preferably not larger than 60 $\mu$m. $D_a$ may be in a range of not smaller than 12 $\mu$m and not larger than 18 $\mu$m. An average pore diameter $D_b$ of the second porous layer is, for example, not smaller than 0.01 $\mu$m and not larger than 10 $\mu$m, more preferably not smaller than 0.05 $\mu$m and not larger than 5 $\mu$m, more preferably not smaller than 0.15 $\mu$m and not larger than 1 $\mu$m, and further preferably not smaller than 0.20 $\mu$m and not larger than 1 $\mu$m.

An average thickness of the first porous layer is, for example, not smaller than 500 μm and not larger than 5000 μm, preferably not smaller than 1000 μm and not larger than 2800 μm, more preferably not smaller than 1400 μm and not larger than 1900 μm.

The second porous layer only needs to be laminated on at least one surface of the first porous layer, and is preferably laminated on only one surface of the first porous layer. The shape of the porous ceramic laminate of the present invention is not limited in particular, and may be a planar shape, a cylindrical shape, or a honeycomb shape, and a cylindrical shape is preferable. In the case where the porous ceramic laminate of the present invention has a cylindrical shape, the second porous layer may be laminated on the outer peripheral surface or the inner peripheral surface or both of the first porous layer, and is preferably laminated on only the outer peripheral surface or only the inner peripheral surface of the first porous layer, and more preferably laminated on only the outer peripheral surface of the first porous layer.

Materials of the first porous layer and the second porous layer are not particularly limited, and each of the first porous layer and the second porous layer preferably contains a metal oxide. In the present invention, the term "metal" is used to include a semimetal such as Si and Ge. The first porous layer preferably contains, as the metal oxide, a metal oxide A and a metal oxide B having a melting point higher than the melting point of the metal oxide A. The second porous layer preferably contains, as the metal oxide, a metal oxide C having a melting point higher than the melting point of the metal oxide A. The metal oxide B and the metal oxide C may be the same or different from each other.

Preferably, the metal oxide A has a melting point of not lower than 95°C and not higher than 1600°C. Specific examples of the metal oxide A include $B_2O_3$, $SiO_2$, $GeO_2$, $Al_2O_3$, $V_2O_5$, $As_2O_5$, $Sb_2O_5$, $ZrO_2$, $TiO_2$, $ZnO$, $PbO$, $ThO_2$, $BeO$, $CdO$, $Ta_2O_5$, $Nb_2O_5$, $WO_3$, $ScO_2$, $La_2O_3$, $Y_2O_3$, $SnO_2$, $Ga_2O_3$, $In_2O_3$, $PbO_2$, $MgO$, $LizO$, $BaO$, $CaO$, $SrO$, $Na_2O$, $KzO$, $RbzO$, $HgO$, $Cs_2O$, $Ag_2O$, $TeOz$, and $Tl_2O$, and a preferable example is $SiO_2$. That is, examples of the metal oxide A include those containing at least one type of the above oxides as a component. The metal oxide A is preferably a glass containing, as a component, at least one of the above oxides in particular, and is preferably a glass containing an oxide of silicon ($SiO_2$ in particular) such as quartz glass, borosilicate glass, or aluminosilicate glass in particular. The metal oxide B and the metal oxide C may be the same or different from each other, and preferably each have a melting point of not lower than 2000°C and not higher than 2800°C. Specific examples of the metal oxide B and the metal oxide C include $Al_2O_3$, $ZrOz$, $MgO$, $Cr_2O_3$, and $Y_2O_3$, and a preferable example is $Al_2O_3$.

In the porous ceramic laminate, one or more other porous layer may be further laminated on the second porous layer, in addition to the first porous layer and the second porous layer. The other porous layer preferably has a smaller average pore diameter than that of the second porous layer. In the case where two or more other porous layer exists, it is preferable to have a configuration in which the average pore diameter of the other porous layer closest to the second porous layer is the largest and the average pore diameter decreases as the layers are laminated.

The porous ceramic laminate of the present invention can reduce pressure loss of a fluid. The permeance of the porous ceramic laminate, the permeance evaluated in Examples described later, can be not smaller than $5.0 \times 10^{-5}$ mol/(m² ·sec -Pa), and preferably not smaller than $1.0 \times 10^{-4}$ mol/(m² ·sec ·Pa), and more preferably not smaller than $1.5 \times 10^{-4}$ mol/(m² ·sec ·Pa). The upper limit of the permeance is not particularly limited, and for example, is $1.5 \times 10^{-3}$ mol/(m² ·sec ·Pa) and may be $5.0 \times 10^{-4}$ mol/(m² ·sec ·Pa).

Next, the process for producing the porous ceramic laminate will be explained. Usually, when trying to laminate the other layer on a porous layer, components of an upper layer (the second porous layer) are taken into pores of a porous layer (the first porous layer) that serves as a substrate. Accordingly, forming the second porous layer in layers is difficult and forming the second porous layer with high uniformity of a thickness is further difficult.

A process for producing the porous ceramic laminate comprises a step of applying a water repellent agent and/or an oil repellent agent to at least one surface of the first porous layer. By applying the water repellent agent and/or the oil repellent agent, components of the second porous layer which is applied thereafter are not taken into pores of the first porous layer, and therefore, the second porous layer with a high uniformity of the thickness can be formed in layers on the first porous layer. The above-mentioned "surface" is meant to include pores existing at the surface of the porous body, the water repellent agent and/or the oil repellent agent is applied to at least one surface of the porous body, including these pores. The water repellent agent and/or the oil repellent agent is applied such that the following conditions (1) and (2) are satisfied.

(1) The water repellent agent and/or the oil repellent agent is applied to at least one surface of the first porous layer and after drying, and when air is flowed at a flow rate of 1.0 m³/h from a surface of the first porous layer applied with the water repellent agent and/or the oil repellent agent (either of applied surfaces in the case where both surfaces are applied to), air flows at a flow rate of at least 0.8 m³/h from a surface opposite to the surface to which air has been flowed.

(2) The water repellent agent and/or the oil repellent agent is applied to at least one surface of the first porous layer and after drying, and when air is flowed at a flow rate of 1.0 m³/h from a surface of the first porous layer applied with the water repellent agent and/or the oil repellent agent (either of applied surfaces in the case where both surfaces are applied to), a weight loss rate between before and after flowing air is within 0.1%.

In other words, it is important that the water repellent agent and/or the oil repellent agent is applied such that aeration is ensured and the water repellent agent and/or the oil repellent agent does not leave the first porous layer when flowing air to the first porous layer after applying the water repellent agent and/or the oil repellent agent at a predetermined flow rate.

For the condition (1), when the water repellent agent and/or the oil repellent agent is applied to one surface of the first porous layer, air should be flowed from the applied surface with the water repellent agent and/or the oil repellent agent and a flow rate of air should be measured at the opposite surface. When the water repellent agent and/or the oil repellent agent is applied to both surfaces, air should be flowed from either of applied surfaces and a flow rate of air should be measured at the opposite surface. Under the condition (1), a duration of air flow is 3 minutes and a temperature of air flow is between 10 and 35°C.

For the condition (2), when the water repellent agent and/or the oil repellent agent is applied to one surface of the first porous layer, air should be flowed from the applied surface with the water repellent agent and/or the oil repellent agent, or when the water repellent agent and/or the oil repellent agent is applied to both surfaces, air should be flowed from either of applied surfaces, and a weight loss rate should be measured. The weight loss rate is a ratio (percentage) calculated by dividing a value, which is obtained by subtracting a weight of the first porous layer after flowing air from a weight of the first porous layer applied with the water repellent agent and/or the oil repellent agent before flowing air, by a weight of the first porous layer before flowing air.

A preferable method of applying the water repellent agent and/or the oil repellent agent is a dip coating method, and drying is usually performed after applying the water repellent agent and/or the oil repellent agent. Drying is preferably performed at about 20 to 50°C for about 1 minute to 24 hours. The water repellent agent and/or the oil repellent agent preferably remains after being applied and dried. As long as the conditions (1) and (2) are satisfied, a composition of the water repellent agent and the oil repellent agent is not limited, and a fluorine-based water and oil repellent agent and a polysiloxane-based water and oil repellent agent can be used. The fluorine-based water and oil repellent agent includes an agent having a perfluoroalkyl group or a perfluoropolyether structure.

The production process preferably further contains a step of applying a slurry containing the metal oxide contained in the second porous layer, a solvent and a thickener to a surface of the first porous layer applied with the water repellent agent and/or the oil repellent agent, and a step of heat treating the first porous layer applied with the slurry.

Examples of the solvent include water and organic solvents. In a preferred embodiment, the metal oxide contained in the second porous layer preferably includes the metal oxide C. The concentration of the metal oxide in the slurry is, for example, not smaller than 2 mass% and not larger than 15 mass%, and preferably not smaller than 4 mass% and not larger than 13 mass%. In the case where the second porous layer contains a plurality of types of metal oxides, the concentration means the total concentration of the plurality of types of metal oxides. The average particle diameter of the metal oxide contained in the second porous layer is, for example, not smaller than 0.1 $\mu$m and not larger than 50 $\mu$m, preferably not smaller than 0.3 $\mu$m and not larger than 30 $\mu$m, more preferably not smaller than 0.3 $\mu$m and not larger than 20 $\mu$m, further preferably not smaller than 0.5 $\mu$m and not larger than 10 $\mu$m, and furthermore preferably not smaller than 0.5 $\mu$m and not larger than 5 $\mu$m.

Examples of the thickener include methyl cellulose, hydroxyethyl methyl cellulose, hydroxyethyl cellulose, hydroxypropyl methyl cellulose, polyalkylene oxide, polyvinyl alcohol, sodium polyacrylate, polyvinylpyrrolidone, polyacrylamide, and polydimethyl aminoethyl methacrylate. The concentration of the thickener in the slurry is, for example, not smaller than 0.5 mass% and not larger than 5 mass%, and preferably not smaller than 1 mass% and not larger than 3 mass%.

The method for applying the slurry to the surface of the first porous layer applied with the water repellent agent or the oil repellent agent is not limited in particular, and examples thereof include a dip coating method, a spray coating method, a roll coating method, a bar coating method, a spin coating method, a slit coating method, and brush coating.

The temperature of the heat treatment is, for example, not lower than 95°C, preferably not lower than 265°C, more preferably not lower than 500°C, and further preferably not lower than 1000°C. The temperature of the heat treatment is, for example, not higher than 1600°C, and preferably not higher than 1400°C. The temperature of the heat treatment is preferably not lower than the softening temperature of the metal oxide A. Specifically, the temperature of the heat treatment is preferably not lower than 1000°C and not higher than 1500°C, and more preferably not lower than 1100°C and not higher than 1400°C. The retention time at the temperature of the heat treatment is, for example, not shorter than 30 minutes and not longer than 10 hours, preferably not shorter than 1 hour and not longer than 8 hours, and more preferably not shorter than 3 hours and not longer than 7 hours.

The porous ceramic laminate can be used as a microfiltration membrane. When a function membrane is further laminated on the second porous layer in the porous ceramic laminate, the porous ceramic laminate of the present invention on which the function membrane has been laminated can also be used as a substrate of a membrane such as an ultrafiltration membrane, a nanofiltration membrane, a reverse osmosis membrane, an ion-exchange membrane, or a gas separation membrane.

The present application claims benefits of priority based on Japanese Patent Application No. 2020-075786 filed on April 22, 2020. The entire contents of Japanese Patent Application No. 2020-075786 filed on April 22, 2020 is incorporated to the present application by reference.

EXAMPLES

The present invention will be described in more detail below by means of examples. The present invention is not limited by the following examples, and can also be carried out with appropriate modifications being made within the scope of the gist described above and below, and any of these modifications are included in the technical scope of the present invention.

The ceramic laminates obtained in the following Examples and Comparative Examples were evaluated by the following methods.

(1)Measurement of pore diameter

The porous ceramic laminate sample was dried for 4 hours at 120°C, and then, measurement was performed according to a mercury intrusion method by use of AutoPore IV9520 (manufactured by Micromeritics). When the first porous layer before being laminated by the second porous layer, and a porous ceramic laminate sample of each Example below were measured, in a log-differentiation pore volume distribution of which the horizontal axis represents pore diameter, one peak was observed in the first porous layer before being laminated by the second porous layer, and two peaks were observed in the porous ceramic laminate of each Example below. The peak position observed in the first porous layer before being laminated by the second porous layer was defined as $D_a$. Out of the two peaks observed in the porous ceramic laminate of each Example below, the peak position on the smaller pore diameter side was defined as $D_b$.

(2) Measurement of a coefficient of variance CV of the second porous layer thickness

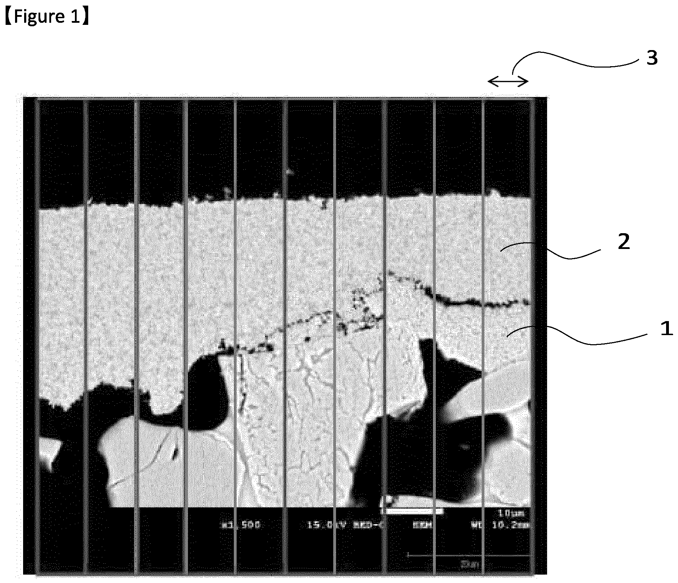

A cylindrical porous ceramic laminate was embedded in a resin and polished to expose a cross section perpendicular to an axis (that is, a cross section parallel to a direction to which the first porous layer and the second porous layer were laminated), and the cross section was observed by a Scanning Electron Microscope (SEM). An image was obtained such that a total length of a surface of the second porous layer on the side of the first porous layer is not smaller than 1.5 mm along the circumferential direction, and only the second porous layer was extracted by an image analysis. The obtained image was delimited at a pitch of 8 $\mu$m into 190 or more regions. The area of each region was determined and a value obtained by dividing the area by 8 $\mu$m was determined as the thickness of each region. An average value and a standard deviation were calculated from the obtained thicknesses, and a coefficient of variance was obtained by dividing the standard deviation by the average value. Further, each of the average thickness $AVE(t_b)$ and the standard deviation $\sigma(t_b)$ of the second porous layer was divided by the pore diameter $D_a$ of the first porous layer. Figure 1 shows a part of the image analysis when the thickness of the second porous layer was measured in Example 2. In Figure 1, 1 represents the first porous layer, 2 represents the second porous layer, and 3 represents the pitch of the measurement (8 $\mu$m in Figure 1).

(3) Measurement of a void ratio

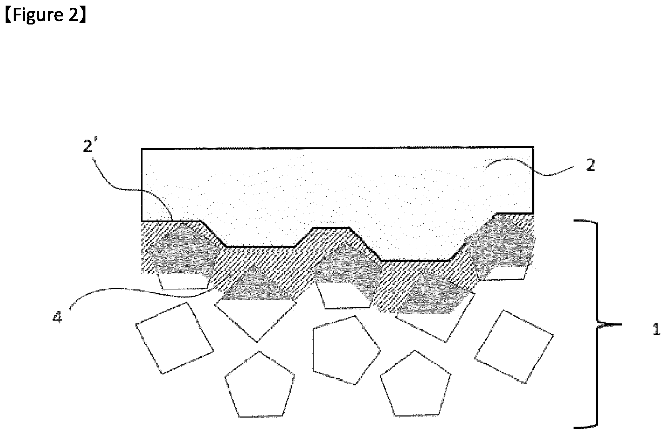

A cylindrical porous ceramic laminate was embedded in a resin and polished to expose a cross section perpendicular to an axis, and the cross section was observed by a Scanning Electron Microscope (SEM). An image was obtained such that a total length of a surface of the second porous layer on the side of the first porous layer is not smaller than 4.0 mm along the circumferential direction, and only the second porous layer was extracted by an image analysis. In a region under the extracted second porous layer, starting from the surface of the second porous layer on the side of the first porous layer (that is, a boundary of the second porous layer on the side of the first porous layer), a region twice a pore diameter of the first porous layer was set by an image analysis along the second porous layer, and the region was defined as an analysis region. A void part in the analysis region was extracted by an image analysis and a void ratio was obtained by dividing the area of the void part by the area of the analysis region and multiplying by 100. Figure 2 shows a method for measuring the void ratio schematically. In Figure 2, 1 represents the first porous layer, 2 represents the second porous layer, 2' represents the boundary of the second porous layer on the side of the first porous layer, and 4 represents the void.

(4) Measurement of permeance

Air was flowed at a constant flow rate of 1.0 m$^3$/h from the outer side of a cylindrical porous ceramic laminate sample, and air was caused to permeate the sample through the inside thereof. The pressure difference before and after the permeation through the sample was measured. The permeance was calculated by the following formula by use of the measured result.

[Formula 1]

$$\text{Permeance } \{\text{mol}/(\text{m}^2 \cdot \text{sec} \cdot \text{Pa})\}$$

$$= \frac{\text{flow rate}\left(\frac{m^3}{h}\right)/3600\ /0.0224}{\{\text{pressure difference (Pa) at measurement of sample} - \text{pressure difference (Pa) measured without sample}\} \times \text{membrane area (m}^2)}$$

Example 1

An alumina substrate A-16, manufactured by Hagi Glass, containing alumina and SiO$_2$ was used as the first porous layer. The substrate A-16 was in a cylindrical shape having an inner diameter of 8.6 mm, an outer diameter of 11.5 mm, and a length of 5 cm. The substrate A-16 was dipped in a water repellent agent SH Conc. (containing a fluorine resin and a petroleum-based hydrocarbon) manufactured by COLUMBUS Inc. and dried for not shorter than 12 hours at room temperature. Next, an alumina powder AKP-3000 manufactured by Sumitomo Chemical Co., Ltd. and a hydroxypropyl methyl cellulose 65SH-30000, as a thickener, manufactured by Shin-Etsu Chemical Co., Ltd. were mixed in water at a concentration 5 wt% and 1.5 wt% respectively, to prepare a slurry. The average particle diameter of the alumina powder AKP-3000 was 0.7 $\mu$m. The upper end and the lower end of the substrate A-16 were sealed so as to prevent the slurry from being taken into the inner peripheral surface of the substrate A-16, and then, the substrate A-16 was dip-coated with the slurry. Then, the substrate A-16 with the slurry applied on the outer peripheral surface thereof was heat-treated for 3 hours at 1200°C. Furthermore, after applying the water repellent agent SH Conc. and drying, it was confirmed that the above conditions (1) and (2) were satisfied.

Comparative Example 1

A sample was obtained in the same manner as in Example 1, except that the substrate was not dipped in the water repellent agent SH Conc. manufactured by COLUMBUS Inc.

Example 2

An alumina substrate A-12, manufactured by Hagi Glass, containing alumina and SiO$_2$ was used as the first porous layer. The substrate A-12 was in a cylindrical shape having an inner diameter of 7.0 mm, an outer diameter of 9.5 mm, and a length of 10 cm. The substrate A-12 was dipped in the water repellent agent SH Conc. manufactured by COLUMBUS Inc. and dried for not shorter than 12 hours at room temperature. Next, an alumina powder AKP-3000 manufactured by Sumitomo Chemical Co., Ltd. and a hydroxypropyl methyl cellulose 65SH-30000, as a thickener, manufactured by Shin-Etsu Chemical Co., Ltd. were mixed in water at a concentration 5 wt% and 1.5 wt% respectively, to prepare a slurry. The average particle diameter of the alumina powder AKP-3000 was 0.7 $\mu$m. The upper end and the lower end of the substrate A-12 were sealed so as to prevent the slurry from being taken to the inner peripheral surface of the substrate A-12, and then, the substrate A-12 was dip-coated with the slurry. Then, the substrate A-12 with the slurry applied on the outer peripheral surface thereof was heat-treated for 3 hours at 1200°C. Applying the slurry and the heat treatment were repeated once more to obtain a sample. Furthermore, after applying the water repellent agent SH Conc. and drying, it was confirmed that the above conditions (1) and (2) were satisfied.

Comparative Example 2

A sample was obtained in the same manner as in Example 2, except that the substrate was not dipped in the water repellent agent SH Conc. manufactured by COLUMBUS Inc.
Table 1 shows results measured according to the above (1) to (4) for Examples and Comparative Examples.

[Table 1]

| | Average pore diameter of first porous layer $D_a$ (μm) | Average pore diameter of second porous layer $D_b$ (μm) | $D_a/D_b$ | Applying water repellent agent | Average thickness of the second porous layer AVE($t_b$) (μm) | Standard deviation of thickness of the secnd porous layer $\sigma(t_b)$ (μm) | Coefficient of variance of the second porous layer thickness CV($t_b$) | $\sigma(t_b)/D_a$ | AVE($t_b$)/$D_a$ | Void ratio (%) | Permeance {mol/(m² · sec · Pa)} |
|---|---|---|---|---|---|---|---|---|---|---|---|
| Example 1 | 4.8 | 0.25 | 19 | YES | 12.6 | 1.9 | 0.15 | 0.40 | 2.6 | 35.1 | $1.6 \times 10^{-4}$ |
| Comparative Example 1 | 4.8 | 0.25 | 19 | NO | 12.6 | 4.5 | 0.36 | 0.95 | 2.6 | 28.7 | $1.2 \times 10^{-4}$ |
| Example 2 | 14.7 | 0.25 | 59 | YES | 21.7 | 7.0 | 0.32 | 0.47 | 1.5 | 31.3 | $1.1 \times 10^{-4}$ |
| Comparative Example 2 | 14.7 | - | - | NO | Slurry was taken into the first porous layer, and the second porous layer was not formed. | | | | | | |

Comparing Example 1 and Comparative Example 1 in Table 1, Example 1, where the coefficient of variance of the second porous layer thickness was not larger than 0.35, achieved a good permeance, whereas Comparative Example 1, where the coefficient of variance was more than 0.35, resulted in inferior permeance compared to Example 1. In Comparative Example 2, where the laminate was prepared in the same manner as in Example 2 except that the water repellent agent was not used, the second porous layer could not be formed, whereas in Example 2, a second porous layer with a coefficient of variance in film thickness not larger than 0.35 could be formed, and good permeance could be achieved.

## Claims

1. A porous ceramic laminate comprising a first porous layer and a second porous layer, wherein

   the second porous layer is laminated on the first porous layer,
   the second porous layer has a portion being laminated on, in contact with, the first porous layer and a portion being laminated over the first porous layer via air, and
   a coefficient of variance CV ($t_b$) of the second porous layer thickness is not larger than 0.35.

2. The porous ceramic laminate according to claim 1, wherein
   an average pore diameter $D_a$ of the first porous layer is not smaller than 0.1 $\mu$m and not larger than 600 $\mu$m.

3. The porous ceramic laminate according to claim 1 or 2, wherein
   a value ($\sigma(t_b) / D_a$) obtained by dividing a standard deviation $\sigma(t_b)$ of a thickness of the second porous layer by an average pore diameter $D_a$ of the first porous layer is not larger than 0.8.

4. The porous ceramic laminate according to any one of claims 1 to 3, wherein
   a value (AVE($t_b$) / $D_a$) obtained by dividing an average value AVE($t_b$) of a thickness of the second porous layer by an average pore diameter $D_a$ of the first porous layer is not larger than 5.

5. The porous ceramic laminate according to any one of claims 1 to 4, wherein
   a void ratio at an interface between the first porous layer and the second porous layer is not smaller than 29.0%.

6. The porous ceramic laminate according to any one of claims 1 to 5, wherein
   a ratio ($D_a / D_b$) of an average pore diameter $D_a$ of the first porous layer to an average pore diameter $D_b$ of the second porous layer is not smaller than 10.

7. A process for producing the porous ceramic laminate according to any one of claims 1 to 6, comprising

   a step of applying a water repellent agent and/or an oil repellent agent to at least one surface of the first porous layer,
   wherein the water repellent agent and/or the oil repellent agent is applied so as to satisfy the following conditions (1) and (2).

   (1) The water repellent agent and/or the oil repellent agent is applied to at least one surface of the first porous layer and after drying, and when air is flowed at a flow rate of 1.0 m$^3$/h from a surface of the first porous layer applied with the water repellent agent and/or the oil repellent agent (either of applied surfaces in the case where both surfaces are applied to), air flows at a flow rate of at least 0.8 m$^3$/h from a surface opposite to the surface to which air has been flowed.
   (2) The water repellent agent and/or the oil repellent agent is applied to at least one surface of the first porous layer and after drying, and when air is flowed at a flow rate of 1.0 m$^3$/h from a surface of the first porous layer applied with the water repellent agent and/or the oil repellent agent (either of applied surfaces in the case where both surfaces are applied to), a weight loss rate between before and after flowing air is within 0.1%.

【Figure 1】

【Figure 2】

**INTERNATIONAL SEARCH REPORT**

| International application No. |
| --- |
| PCT/JP2021/013454 |

**A. CLASSIFICATION OF SUBJECT MATTER**

B01D 39/20(2006.01)i; B01D 71/02(2006.01)i; C04B 41/83(2006.01)i; C04B 41/89(2006.01)i
FI: C04B41/89; B01D39/20 D; B01D71/02; C04B41/83 A

According to International Patent Classification (IPC) or to both national classification and IPC

**B. FIELDS SEARCHED**

Minimum documentation searched (classification system followed by classification symbols)
B01D39/20; B01D71/02; C04B41/83; C04B41/80-C04B41/91

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2000-288324 A (NGK INSULATORS, LTD.) 17 October 2000 (2000-10-17) claims, paragraphs [0065]-[0066], [0075]-[0079] | 1-6<br>7 |
| X<br>Y | JP 2004-914 A (NGK INSULATORS, LTD.) 08 January 2004 (2004-01-08) claims, paragraphs [0053]-[0064], [0077]-[0080], fig. 5 | 1-3, 5-6<br>7 |
| Y | JP 2007-45691 A (RESEARCH INSTITUTE OF INNOVATIVE TECHNOLOGY FOR THE EARTH) 22 February 2007 (2007-02-22) paragraphs [0008]-[0011] | 7 |
| A | WO 2019/160122 A1 (KYOCERA CORP.) 22 August 2019 (2019-08-22) | 1-7 |
| A | WO 2005/014149 A1 (ASAHI KASEI CORPORATION) 17 February 2005 (2005-02-17) | 1-7 |

☒ Further documents are listed in the continuation of Box C. ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 19 May 2021 (19.05.2021) | 01 June 2021 (01.06.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

13

**INTERNATIONAL SEARCH REPORT**

| International application No. |
| --- |
| PCT/JP2021/013454 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | 坂元俊介，梶野哲平，奈須義総，榊祥太，酒谷能彰，高純度アルミナの新規技術開発と用途展開，住友化学，vol. 2020, pp. 17-25, fig. 9, fig. 9, (SAKAMOTO, Shunsuke, KAJINO, Teppei, NASU, Tomomichi, SAKAKI, Shota, SAKATANI, Yoshiaki, "New Technology and Application Development of High Purity Alumina", SUMITOMO KAGAKU) | 1-7 |

Form PCT/ISA/210 (continuation of second sheet) (January 2015)

INTERNATIONAL SEARCH REPORT

Information on patent family members

International application No.

PCT/JP2021/013454

| Patent Documents referred in the Report | Publication Date | Patent Family | Publication Date |
|---|---|---|---|
| JP 2000-288324 A | 17 Oct. 2000 | US 6509060 B1 claims, column 9, lines 34-61, column 10, line 45 to column 12, line 27 | |
| JP 2004-914 A | 08 Jan. 2004 | (Family: none) | |
| JP 2007-45691 A | 22 Feb. 2007 | (Family: none) | |
| WO 2019/160122 A1 | 22 Aug. 2019 | (Family: none) | |
| WO 2005/014149 A1 | 17 Feb. 2005 | US 2007/0029256 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020075786 A